Europäisches Patentamt

European Patent Office

Office européen des brevets

(19)

(11) Veröffentlichungsnummer : **0 131 872**
**B1**

# EUROPÄISCHE PATENTSCHRIFT

(12)

(45) Veröffentlichungstag der Patentschrift :
30.09.87

(21) Anmeldenummer : 84107932.0

(22) Anmeldetag : 06.07.84

(51) Int. Cl.⁴ : **F 24 H   3/06**

(54) **Raumheizgerät für Kleinräume.**

(30) Priorität : 13.07.83 DE 3325344

(43) Veröffentlichungstag der Anmeldung :
23.01.85 Patentblatt 85/04

(45) Bekanntmachung des Hinweises auf die Patenterteilung : 30.09.87 Patentblatt 87/40

(84) Benannte Vertragsstaaten :
BE FR GB IT NL SE

(56) Entgegenhaltungen :
DE-A- 2 434 450
FR-A- 2 149 772
NL-C-    43 876
US-A- 2 384 836
US-A- 3 265 058

(73) Patentinhaber : **Philipp Kreis GmbH & Co. TRUMA-
Gerätebau
Wernher-von-Braun-Strasse 12-14
D-8011 Putzbrunn (DE)**

(72) Erfinder : **Mossbach, Wilhelm
Rotbuchenstrasse 37
D-8011 Kirchseeon (DE)**

(74) Vertreter : **Hain, Leonhard, Dipl.-Ing.
Tal 18/IV
D-8000 München 2 (DE)**

## Beschreibung

Die Erfindung betrifft ein Raumheizgerät für Kleinräume, insbesondere für fahrbare Räume, wie Wohnwagen, Fahrzeug- und Schiffskabinen od. dgl., gemäß dem Oberbegriff des Patentanspruches 1.

Ein Raumheizgerät dieser Art (DE-A-21 39 504) weist zum Erwärmen von Heizluft einen Wärmetauscher aus einem im Querschnitt kreisrunden Rohr auf, von dem innere und äußere Lamellen als indirekte Heizflächen abstehen. Am offenen Ende befindet sich eine mit flüssigem Brennstoff befeuerte Brennkammer. In einem Abstand ist dieser Wärmetauscher von einem Heizraummantel umgeben, um einen Heizraum für die zu erwärmende Heizluft zu bilden. Bei diesem Heizgerät sind nicht nur die Brennkammer, sondern auch die Frischluft- und Heizluftzuführungen mit ihren Gebläsen dem Wärmetauscher in axialer Verlängerung zugeordnet, so daß ein verhältnismäßig langes Gerät entsteht, das sich deshalb nur in liegender Anordnung einsetzen läßt. Bei einem anderen Heizgerät (US-A-3 265 058) wird ein ebenfalls zylindrischer Wärmetauscher aus einer einfachen Blechwand ebenfalls von einem Heizraummantel umgeben. Die für flüssigen Brennstoff ausgebildete Brennkammer ist außerhalb des Wärmetauschers angeordnet und mittels eines glockenförmigen Bodens mit der Zerstäuberkammer verbunden. Die Zuluftkammern für die Verbrennungs- und Heizluft sind bei diesem Gerät neben dem Wärmetauscher angeordnet. In einer Heizluftkammer, die mit dem Heizraum in Verbindung steht, ist ein Antriebsmotor mit einem Ventilator untergebracht, um die aus dem Raum angesaugte Luft in den Heizraum zu drücken. Da dieser Ventilator verhältnismäßig weit vom Wärmetauscherfuß abgesetzt ist, wird der Wärmetauscher gerade in seinem heißesten Abschnitt nur wenig von der zu erwärmenden Luft berührt. Ein weiteres Ventilatorrad ist auf der Gegenseite des Antriebsmotors gelagert und von der Heizluftkammer abgeschlossen. Es dient zur Zwangsführung der Verbrennungsluft. Wie die Heizluft, so läßt sich auch die Verbrennungsluft infolge verschiedener Einbauten und Umlenkungen strömungstechnisch nicht optimal führen, so daß wegen des geringeren Wirkungsgrades der Wärmetauscher für eine ausreichende Heizleistung verhältnismäßig lang sein muß, was für ein nicht in liegender Stellung einzusetzendes Heizgerät besonders nachteilig ist.

Der Erfindung liegt nunmehr die Aufgabe zugrunde, für ein mit gasförmigem Brennstoff befeuertes Raumheizgerät für Kleinräume eine verbesserte Luftführung für die Heiz- und Verbrennungsluft zu schaffen, damit durch erhöhte Heizleistung die Bauhöhe des Gerätes reduziert und ein leistungsfähiges Standgerät gebildet werden kann.

Diese Aufgabe wird mit einem Heizgerät von der im Oberbegriff des Patentanspruches 1 genannten Art gemäß der Erfindung durch die kennzeichnenden Merkmale dieses Patentanspruches gelöst.

Bei einem erfindungsgemäß ausgebildeten Heizgerät mit einem den Wärmetauscher in voller Höhe umschließenden Heizraummantel ist zur Steigerung der Heizluftströmung eine nur einem Gebläserad angepaßte Gebläsekammer unmittelbar am Wärmetauscherfuß angeordnet, so daß die zwangsweise in den Heizraum eingeblasene Heizluft den Wärmetauscher in voller Höhe und damit auch an der heißesten Stelle berührt. Durch die Erweiterung der Basisplatte der Brennkammer um eine seitliche Abschlußplatte der Gebläsekammer zu einem planen Plattenelement wird nicht nur die Konstruktion und der Aufbau dieses Heizgerätes wesentlich vereinfacht, so daß sich Gebläsekammer sowie Frischluft-Vorkammer auch zu strömungstechnisch günstigen Spiralgehäusen weiterentwickeln lassen, sondern es wird hierdurch auch eine extrem niedrige Bauhöhe erreicht und dadurch die Ausbildung eines Standgerätes begünstigt.

Als vorteilhaft hat sich erwiesen, dieses Heizgerät mit einem weiteren Außenmantel auszustatten, der sowohl die Gebläsekammer als auch die Frischluft-Vorkammer einschließt und so eine zusätzliche Vorwärmung der Verbrennungs- und Heizluft ermöglicht.

Ein besonders leistungsstarkes Heizgerät ergibt sich, wenn die erfindungsgemäßen Merkmale an einem Wärmetauscher mit einem Wellenmantel und einem Ringraum verwirklicht werden.

Vorteilhafte Weiterentwicklungen der Erfindung sind in weiteren Unteransprüchen beansprucht.

Die Erfindung wird nachfolgend anhand eines Ausführungsbeispieles, das auch in der Zeichnung schematisiert dargestellt ist, näher beschrieben. Es zeigen :

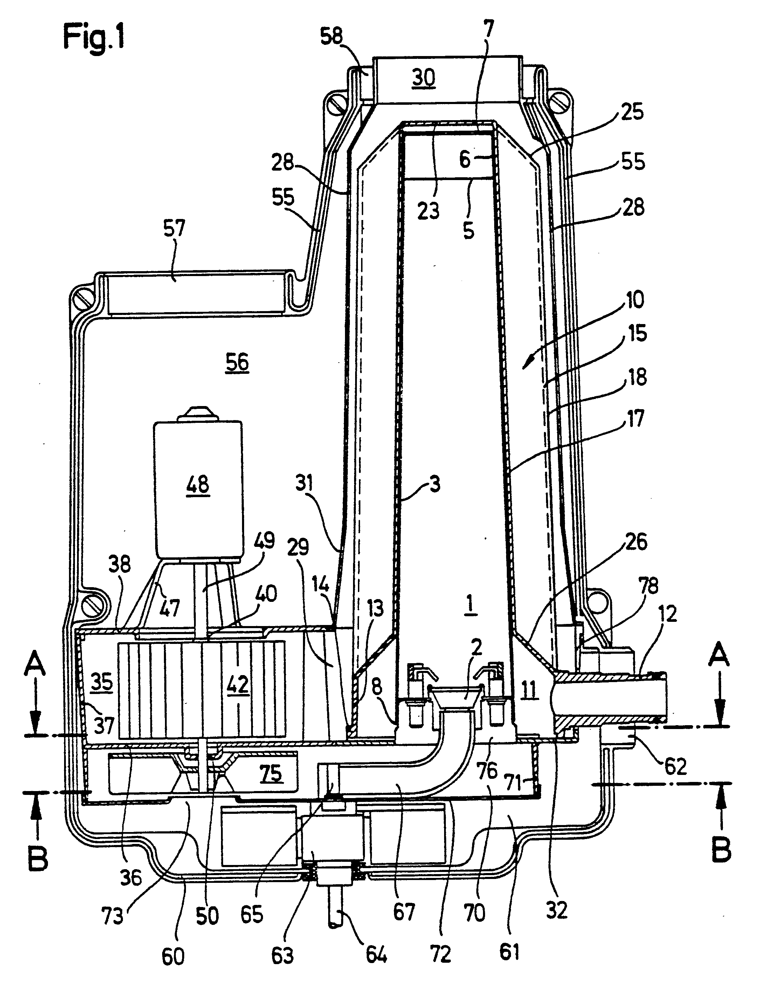

Figur 1 einen Vertikalschnitt durch ein Raumheizgerät,

Figur 2 einen Horizontalschnitt nach der Linie A-A der Fig. 1,

Figur 3 einen Horizontalschnitt nach der Linie B-B der Fig. 1 und

Figur 4 einen Vertikalschnitt durch ein Gebläsekammer-Formstück.

In dem vereinfacht dargestellten Raumheizgerät sind in einer Brennkammer 1 ein nicht näher beschriebener Brenner 2. Ein Flammrohr 3 ist mit seinem Aufsteckende 8 auf diesen Brenner 2 aufgesetzt. Dieses flammrohr erstreckt sich im Innern eines Wärmetauschers 10 nach oben, wo es mit seiner oberen Austrittsöffnung 5 kurz vor einer Deckenfläche 23 des Wärmetauschers endet. Mittels Stützen 8 ist auf das Flammrohr noch eine Schutzplatte 7 aufgesetzt, die die Wärmetauscher-Deckenfläche 23 vor Überhitzung schützt. Der Wärmetauscher 10, zweckmäßig ein Formstück aus einer Aluminiumlegierung, bildet an seinem offenen Ende durch einen Sockelzylinder 13 einen Ringraum 11. Ein Sockelbund 14 ist noch zur Halterung des Wärmetauschers auf einer Basisplatte 32 ausgebildet. Vom Ringraum 11 führt ein Abgasstutzen 12 für den Abzug der Verbrennungsgase nach außen. Der Wärmetauscher wird beispielsweise von einem Wellenmantel 15 gebildet. Dieser besteht aus gleichmäßig um den Umfang verlaufenden Wellen mit äußeren Wellenbergen 18 und inneren Wellentälern 17. In den von diesen Wellen gebildeten Kanälen strömen die Verbrennungsgase nach dem Austritt aus dem Flammrohr und Umlenkung an der Deckenfläche 23 nach unten, wo sie vom Ringraum 11 aufgenommen und schließlich durch den Abgasstutzen 12 ins Freie abgeführt werden. Die inneren Wellenkanäle sind oben durch Umlenkwände 25 abgeschlossen, die nach außen schräg abfallen und dadurch günstige Umlenkflächen für die Verbrennungsgase bilden. Der vom Sockelzylinder 13 gebildete Ringraum 11 ist nach außen durch die Übergangswände 26 begrenzt. Liegt das Flammrohr, wie im Ausführungsbeispiel gezeigt, direkt an den Innenflächen der Wellentäler 17 an, dann wird vom Flammrohr die Wärme direkt auf den Wärmetauscher übertragen. Andererseits schließt das an den Wellentälern 17 anliegende Flammrohr 3 diese Wellenkanäle voneinander ab, so daß die Verbrennungsgase in eine Vielzahl von Einzelströmen aufgeteilt werden, die in Form von verhältnismäßig schmalen Strömungsschichten nach unten abfallen und dabei von verhältnismäßig großen Heizflächen umgeben sind. Auf diese Weise ergibt sich eine sehr gleichmäßige Verteilung der Verbrennungsgase und damit auch eine gleichmäßige Wärmeabgabe auf den gesamten Umfang des Wärmetauschers. Der Ringraum 11 wirkt hierbei als Sammelraum für die abfallenden Verbrennungsgase und gewährleistet so ihren ungestörten Abzug, auch wenn nur an einer Stelle ein Abgasstutzen vorhanden ist.

Der Wärmetauscher 10 ist in einem vorbestimmten Abstand von einem Heizraummantel 28 umgeben. Eine Heizluft-Eintrittsöffnung 29 auf der Höhe des Ringraumes 11 ermöglicht einen ausreichenden Luftzutritt, wobei eine geringfügige Erweiterung 31 des Heizraummantels im unteren Bereich für eine gleichmäßige Verteilung der zuströmenden Luft um den Wärmetauscher sorgt. Oberhalb des Wärmetauschers wird der Heizraummantel zu einer Heizluft-Austrittsöffnung 30 zusammengeführt, aus der die Heizluft entweder direkt in den zu erwärmenden Raum aus- oder in ein Leitungssystem überströmen kann. Der Wärmetauscher und damit der Heizraummantel können auch genau zylindrisch sein. Eine vorbestimmte Konizität, die die Gaskonzentration infolge Abkühlung berücksichtigt und dadurch eine Strömungsverzögerung vermeidet, ist jedoch vorteilhaft.

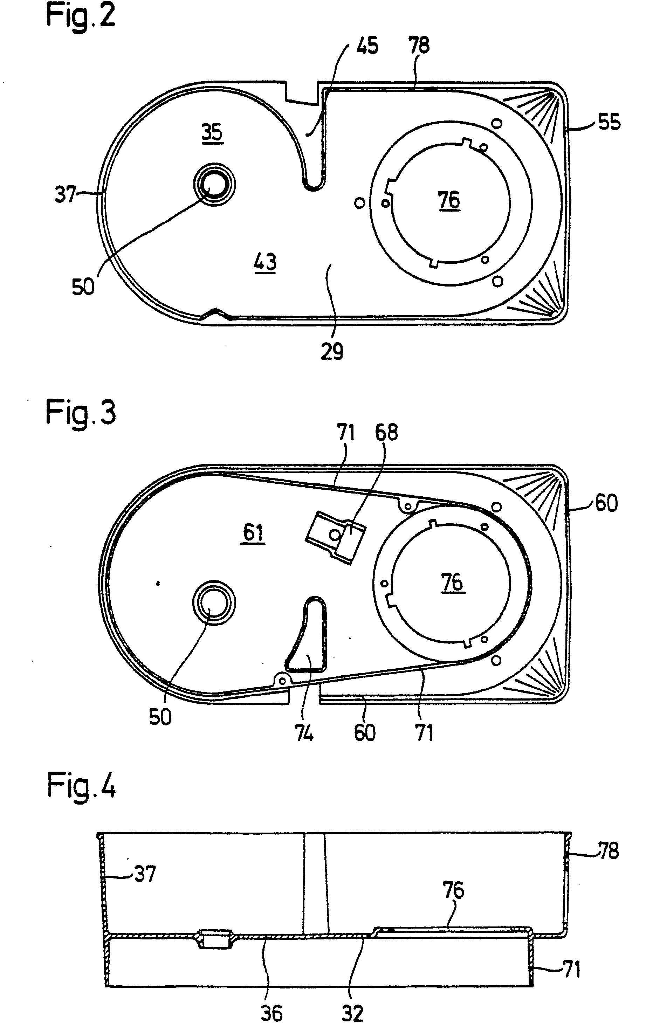

Um auch bei engem Heizraum die Heizluftströmung zwischen Wärmetauscher und Heizraummantel 28 zu verbessern und insbesondere zu verstärken, ist eine Zwangströmung vorgesehen. Zu diesem Zweck schließt sich an die Heizluft-Eintrittsöffnung 29 eine Gebläsekammer 35 an, die unten von einer Abschlußplatte 36, an der Seite von einer spiralförmig verlaufenden Kammerwand 37 und oben von einer Deckplatte 38 begrenzt ist. In der Deckplatte ist eine Ansaugöffnung 40 ausgebildet, durch die anzuwärmende Heizluft in die Gebläsekammer einströmt, von einem Radialgebläse 42, z. B. in Form eines Walzenrades, verdichtet und durch die Eintrittsöffnung 29 in den Heizraum gedrückt wird. Um einen guten Wirkungsgrad zu erzielen, ist die Gebläsekammer, wie insbesondere Fig. 2 zeigt, im Querschnitt spiralförmig ausgebildet und auch das Radialgebläse selbst ist gegenüber dem Wärmetauscher 10 versetzt gelagert, so daß die Kammerwand einen Gebläsediffusor 43 bildet, der direkt in die ebenfalls zur Seite verschobene Eintrittsöffnung 29 übergeht. Zur Vervollständigung des Spiralgehäuses bildet die Kammerwand eine Einschnürung 45, die auf der Innenseite die Eintrittsöffnung 29 begrenzt, so daß die Heizluft dem Heizraum radial zugeführt und auf diese Weise eine etwa schraubenförmig hochsteigende Heizluftströmung, die sich auf den ganzen Umfang des Heizgerätes gleichmäßig verteilt, eingeleitet wird. Das Gebläse 42 wird durch einen auf der Deckplatte 38 mittels eines Ständers 47 angeflanschten Motors 48 über die Welle 49 angetrieben, die auf der anderen Gebläseseite in einem Lager 50 gelagert ist. Die Abschlußplatte 36 ist zweckmäßig eine Erweiterung der Basisplatte 32, die das Heizgerät und damit den Verbrennungsgasstrom gegenüber der Heizluft sicher abschließt.

Bei einem Heizgerät der vorbeschriebenen Ausführungsform wird die zu erwärmende Luft ohne besondere Führung aus dem Raum entnommen und durch das Gebläse dem Heizraum zugeführt. Um diese Raumluft bereits vorzuwärmen und zugleich den heißen Heizraummantel 28 zu schützen, ist ein Außenmantel 55 vorgesehen, der den Heizraummantel mit Abstand umgibt und auf der Seite der Eintrittsöffnung 29 um eine Ansaugsammelkammer 56 erweitert, die eine nach oben gerichtete Einlaßöffnung 57 aufweist, so daß die Raumluft sowohl durch diese Öffnung als auch durch einen Ringeinlaß 58, der die Heizluft-Austrittsöffnung 30 des Heizraumes umgibt, einströmen kann. Auf diese Weise wird erreicht, daß dem Heizraum eine bereits merklich vorgewärmte Raumluft zugeführt wird, da insbesondere die durch den Ringeinlaß zuströmende Luft dem Heizraummantel entlangströmt und erst nach ihrer Erwärmung in die Ansaugsammelkammer 56 gelangt, wo sie sich mit der nicht vorgewärmten Raumluft vermischt. Der Außenmantel besteht zweckmäßig aus zwei längsgeteilten Schalen.

Um dieses Heizgerät unabhängig von der Verbrennungsgasführung in einem Raum aufstellen zu können, setzt sich der Außenmantel 55 bis unter die Abschluß- und Basisplatte 36 fort und bildet mit seinem Aufsetzgehäuse 60 eine untere, in sich geschlossene Frischluftkammer 61. Zweckmäßigerweise ist ihr Einlaß 62 an die Stelle des Abgasstutzens 12 verlegt, den er ringförmig umgibt, so daß auch die dem Brenner zuzuführende Frischluft schon durch den Abgasstutzen vorgewärmt wird. Außerdem ist es dadurch möglich, dieses Heizgerät an einen Wandanschlußkasten mit kombinierter Frischluft- und Abgasöffnung (nicht dargestellt) anzuschließen. Durch die Vorwärmung der Frischluft wird natürlich auch das durch den Abgasstutzen 12 abströmende Verbrennungsgas abgekühlt. Die koaxiale Frischluftzufuhr bringt noch den weiteren Vorteil, daß bei einer Undichtigkeit in der Abgasführung das austretende Gas vom Frischluftstrom aufgenommen und zum Brenner geführt wird, der bei zu starker Anreicherung selbständig erlischt. Insbesondere bei einer längeren Abgasleitung bis zur Raumaußenwand wird so das Rauminnere sicher geschützt. Diese Frischluftkammer kann auch Regel-Organe, wie ein automatisch gesteuertes Gasventil 63 aufnehmen, das mit einer von einer Gasleitung 64 gespeisten Gasdüse 65 in Verbindung steht. Diese Gasdüse befindet sich in einer Eingangsöffnung eines Mischerrohres 67, das von einer Klemme 68 (Fig. 3) gehalten zum Brenner 2 führt und von einem flexiblen Rohr gebildet ist, dessen gewellte Innenfläche die Vermischung des Gases mit der Erstluft fördert. Die Frischluft kühlt auch das Gasventil und sonstige hier untergebrachte Armaturen.

Damit die Frischluftzufuhr und damit auch die Verbrennungsgasströmung von den Außenverhältnissen weitgehend unabhängig sind, ist auch in diesem Bereich eine Zwangsführung der Frischluft vorgesehen. Zu diesem Zweck ist im Innern der Frischluftkammer eine Vorkammer 70 ausgebildet, die oben durch die Abschluß- und Basisplatte 36, 32, seitlich durch eine Wand 71 und unten durch eine Bodenplatte 72 begrenzt ist. Eine Einströmöffnung 73 ist abgelegen vom Einlaß 62 und etwa koaxial zur Ansauggöffnung 40 in der Abschlußplatte ausgebildet. Die durch den Einlaß eintretende Frischluft muß daher die Frischluftkammer 61 bis zum anderen Ende durchströmen, bevor sie in die Vorkammer 70 gelangt. Unterstützt wird diese Strömung durch ein in der Vorkammer auf die Einströmöffnung 73 ausgerichtetes Ventilatorrad 75, das die angesaugte Luft an der Gasdüse vorbei als Erstluft in das Mischerrohr 67 und an diesem vorbei als Zweitluft durch einen Basisplattendurchbruch 76 zum Brenner 2 fördert. Das Ventilatorrad ist dabei gleichachsig zum Radialgebläse 42 angeordnet und kann ebenfalls vom Motor 48 angetrieben werden. Die Vorkammerwand 71 ist im Bereich des Ventilatorrades wiederum spiralförmig gegenüber dem Achslager 50 ausgebildet, wobei dieser so gestaltete Druckraum noch durch einen Einsatzkeil 74 (Fig. 3) ergänzt wird.

Bei diesem Aufbau sind die Gebläsekammer 42 und die Vorkammer 70 durch die gemeinsamen Abschluß- und Basisplatten 36, 32 getrennt und da auch die Gestaltung dieser Kammern weitgehend übereinstimmt, läßt sich durch die Ausbildung eines solchen Formstückes eine wesentliche Vereinfachung im Geräteaufbau und in der Montage erzielen. Dieses Formstück besteht, wie Fig. 4 zeigt, aus der Abschluß- und Basisplatte 36, 32, der davon einseitig abstehenden Gebläsekammerwand 37, die um einen Heizraumsockel 78 erweitert ist, sowie der auf der anderen Seite abstehenden Vorkammerwand 71.

Die Erfindung ist nicht auf das dargestellte Ausführungsbeispiel beschränkt. So kann der Außenmantel entfallen, wenn auf die Vorwärmung der Umluft verzichtet wird. Auch die Frischluftkammer ist nicht immer notwendig. Andererseits ist auch die Ausbildung der Frischluft- und Vorkammer 61, 70 ohne den Außenmantel 55 möglich. Die höchste Leistung und größten Vorteile bietet das Heizgerät aber mit einem Außenmantel zur Umluft- bzw. Heizluftführung, sowie mit Frischluft- und Vorkammer, wobei zweckmäßigerweise diese Einrichtungen von einem Gehäuse gebildet werden und so ein verhältnismäßig kleines, kompaktes und in dem Raum aufstellbares Heizgerät entsteht.

**Patentansprüche**

1. Mit gasförmigem oder vergastem flüssigen Brennstoff befeuertes Raumheizgerät für Kleinräume, insbesondere für fahrbare Räume, wie Wohnwagen, Fahrzeug- und Schiffskabinen od. dgl., mit einem von Verbrennungsgasen durchströmten Wärmetauscher (10), dessen Längsachse vertikal angeordnet und der unten durch eine mit einer Frischluftdurchbrechung (76) und einem Brenner (2) versehenen Basisplatte (32) abgeschlossen ist, einem den Wärmetauscher umgebenden Heizraummantel (28) zur Bildung eines Heizraumes, einer mit diesem Heizraum in Verbindung stehenden Luftkamner mit einem Gebläserad (42) zur Zufuhr der zu erwärmenden Heizluft und einem gegenüber der Heizluftführung abgeschlossenen Ventilatorrad (75) für die Verbrennungsluft, dadurch gekennzeichnet, daß die Basisplatte (32) auf der Gebläsekammer-Seite um eine Abschlußplatte (36) zu einem planen Plattenelement erweitert ist, auf der Abschlußplatte (36) eine Gebläsekammer (35) mit einem in Richtung Heizraum wirkenden Gebläserad (42) ausgebildet ist, deren obere Deckplatte (38) mit einer nach oben gerichteten Ansaugöffnung (40) versehen ist, über der ein Antriebsmotor (48) für das Gebläserad auf der Abdeckplatte (48) aufgesetzt ist, die Gebläsekammer (35) mit ihrer Kammerwand (37) in den Heizraummantel (28) unter Bildung einer unmittelbar oberhalb der Basisplatte angeordneten Heizluft-Eintrittsöffnung (29) übergeht, Abschluß- und Basisplatte (36, 32) die obere Begrenzungswand für eine Frischluft-Vorkammer (70) bilden, die mittels des Basisplatten-Durchbruches mit dem Brenner in Verbindung steht und in der ein Brenner-Mischrohr (67) zu einer in vertikaler Ebene liegenden Eintrittsöffnung gekrümmt sowie das Ventilatorrad (75) gleichachsig zum Gebläserad (42) angeordnet ist.

2. Raumheizgerät nach Anspruch 1, dadurch gekennzeichnet, daß der Heizraummantel (28) in einem vorbestimmten Abstand von einem Außenmantel (55) umgeben ist, der die Gebläsekammer (35) einschließt und oberhalb dieser eine Ansaug-Sammelkammer (56) mit einer nach oben gerichteten Einlaßöffnung (57) sowie einen eine Heizluft-Austrittsöffnung (30) des Heizraummantels (28) umgebenden Ringeinlaß (58) für die zu erwärmende Heizluft bildet.

3. Raumheizgerät nach Anspruch 1 oder 2, dadurch gekennzeichnet, daß der Außenmantel (55) die Frischluft-Vorkammer (70) unter Bildung einer Frischluftkammer (61) umschließt und einen einen Abgasstutzen (12) umgebenden Einlaß (62) in die Frischluftkammer bildet.

4. Raumheizgerät nach einem der Ansprüche 1 bis 3, dadurch gekennzeichnet, daß eine Kammerwand (37) der Gebläsekammer (35) zur Bildung eines Gebläsedruckraumes von einer Einschnürung (45) ausgehend sich spiralförmig zu einem Gebläsediffusor (43) erweitert, der tangential in den Heizraum einmündet.

5. Raumheizgerät nach einem der Ansprüche 1 bis 4, dadurch gekennzeichnet, daß die Frischluft-Vorkammer (70) mit ihrer Seitenwand (61) zu einem Spiralgehäuse ausgebildet ist, in dem das Ventilatorrad (75) in Richtung Mischrohröffnung arbeitet.

6. Raumheizgerät nach einem der Ansprüche 1 bis 5, dadurch gekennzeichnet, daß Gebläsekammer (35) und Vorkammer (70) von einem gemeinsamen Formstück aus dem planen Plattenelement der Abschluß- und Basisplatten (36, 32), den davon gegenseitig abstehenden Gebläsekammer- und Vorkammerwänden (37, 71) sowie einem die Gebläsekammerwand ergänzenden Heizraumsockel (78) gebildet sind.

7. Raumheizgerät nach einem der Ansprüche 1 bis 6, dadurch gekennzeichnet, daß die Frischluftkammer (61) zu einem Aufsetzgehäuse (60) ausgebildet ist.

8. Raumheizgerät nach einem der Ansprüche 1 bis 7, dadurch gekennzeichnet, daß der vom Heizraummantel (28) umgebene Wärmetauscher (10) einen Wellenmantel (15) mit nach außen offenen Wellenkanälen für die hochsteigende Heizluft sowie einen an seinem Fuß ausgebildeten Ringraum (11) aufweist, dessen Sockelzylinder (13) mit seinen Übergangswänden (26) in seiner Höhe der Heizraummantel-Eintrittsöffnung (29) angepaßt ist.

### Claims

1. Heater for small spaces, especially for mobile spaces, such as caravans, cabins of vehicles and of ships or the like, adapted to be fired with a gaseous or gasified liquid fuel, having a heat exchanger (10) through which combustion gases are passing, the longitudinal axis of the heat exchanger being arranged vertically and its bottom being closed by a base plate (32) having a passage (76) for fresh air and a burner (2), a heating jacket (28) surrounding the heat exchanger for forming a heating chamber, an air chamber being in connection with said heating chamber and having an impeller (42) for supplying the air to be heated and a blower wheel (75) for the combustion air which is closed against the heating air duct, characterized in that the base plate (32) is, at the side of the fan chamber, enlarged by a cover plate (36) to form a plane plate element, that a fan chamber (35) having an impeller (42) acting towards the heating chamber is formed upon the cover plate (36), the upper top plate (38) of said fan chamber having an intake port (40) directed upward, a driving motor (48) for the impeller being placed on the top plate above the intake port, that the fan chamber (35) with its chamber wall (37) is joined to the heating jacket (28) thus forming an inlet opening (29) for the heating air which is placed immediately above the base plate, that the cover plate and the base plate (36, 32) form the upper terminating wall for an antechamber (70) for fresh air which is in connection with the burner via the passage of the base plate and in which a mixing tube (67) of the burner is bent towards an inlet opening situated in a vertical plane and the blower wheel (75) is arranged coaxially to the impeller (42).

2. Heater according to claim 1, characterized in that the heating jacket (28) is surrounded by an outer jacket (55) in a predetermined distance, the outer jacket (55) enclosing the fan chamber (35) and forming above the fan chamber an intake chamber (56) with an inlet opening (57) directed upward as well as an annular inlet opening (58) for the air to be heated which surrounds an outlet opening (30) for the heating air of the heating jacket (28).

3. Heater according to claim 1 or 2, characterized in that the outer jacket (55) surrounds the antechamber (70) for fresh air thus forming a chamber (61) for fresh air, and that it forms an inlet (62) to the chamber for fresh air which surrounds an exhaust pipe (12).

4. Heater according to one of the claims 1 to 3, characterized in that for forming a fan pressure chamber a wall (37) of the fan chamber (35), starting from a contraction (45), enlarges spirally to a diffuser (43) which tangentially enters the heating chamber.

5. Heater according to one of the claims 1 to 4, characterized in that the antechamber (70) for fresh air together with its lateral wall (61) is formed to a spiral housing where the blower wheel (75) works in the direction of the mixing tube opening.

6. Heater according to one of the claims 1 to 5, characterized in that the fan chamber (35) and the antechamber (70) are formed by a unit piece consisting of the plane plate element of the cover plates and base plates (36, 32), of the fan chamber and antechamber walls (37, 71) protruding from the plate element in opposite directions and of a heating chamber base (78) completing the fan chamber wall.

7. Heater according to one of the claims 1 to 6, characterized in that the antechamber (61) for fresh air is shaped in such a way that it forms a standing casing (60).

8. Heater according to one of the claims 1 to 7, characterized in that the heat exchanger (10) surrounded by the heating jacket (28) has an undulated jacket (15) with undulated channels which are open outward for the rising heating air as well as an annular chamber (11) formed at its bottom whose base cylinder (13) with its transition walls (26) is, as far as its height is concerned, adapted to the inlet opening (29) of the heating jacket.

**Revendications**

1. Dispositif de chauffage pour petites enceintes, en particulier pour enceintes mobiles, telles que des caravanes, des cabines de véhicule et de navire, ou des enceintes analogues, dans lequel du combustible gazeux ou du combustible liquide gazéifié est brûlé et qui comporte un échangeur de chaleur (10) traversé par des gaz de combustion, dont l'axe longitudinal est disposé verticalement et qui est fermé vers le bas par une plaque de base (32) pourvue d'un passage (76) pour de l'air frais et d'un brûleur (2), une enveloppe de chambre de chauffe (28) entourant l'échangeur de chaleur pour former une chambre de chauffe, une chambre d'air qui est en communication avec cette chambre de chauffe et qui présente une roue de ventilateur (42) pour l'amenée de l'air à chauffer, et une roue de ventilateur (75) pour l'air de combustion, qui est isolée du circuit d'air de chauffe, caractérisé en ce que la plaque de base (32) est, du côté de la chambre de ventilateur, élargie en une plaque de fermeture (36) pour former un élément de plaque plan, en ce qu'une chambre de ventilateur (35) comportant une roue de ventilateur (42) agissant en direction de la chambre de chauffe est réalisée sur la plaque de fermeture (36), en ce qu'une plaque de couvercle supérieur (38) de cette chambre de ventilateur présente une ouverture d'aspiration (40) dirigée vers le haut, par l'intermédiaire de laquelle un moteur d'entraînement (48) pour la roue de ventilateur est monté sur la plaque de couvercle, en ce que la chambre de ventilateur (35) avec sa paroi (37) passe dans l'enveloppe de chambre de chauffe (28) en formant une ouverture d'entrée d'air de chauffe (29) qui est agencée directement au-dessus de la plaque de base, et en ce que la plaque de fermeture et de base (36, 32) forment la paroi de limite supérieure d'une chambre de précombustion à air frais (70) qui est en communication avec le brûleur au moyen du passage dans la plaque de base et dans laquelle un tube mélangeur (67) pour le brûleur est recourbé vers une ouverture d'entrée située dans un plan vertical et la roue de ventilateur (75) est disposée sur le même axe que la roue de ventilateur (42).

2. Dispositif de chauffage suivant la revendication 1, caractérisé en ce que l'enveloppe de chambre de chauffe (28) est entourée, à une distance prédéterminée, par une enveloppe externe (55) qui renferme la chambre de ventilateur (35) et forme, au-dessus de celle-ci, une chambre d'aspiration (56) avec une ouverture d'entrée dirigée vers le haut (57), ainsi qu'une entrée annulaire (58) pour l'air à chauffer, qui entoure une ouverture de sortie d'air de chauffe (30) de l'enveloppe de chambre de chauffe (28).

3. Dispositif de chauffage suivant l'une des revendications 1 et 2, caractérisé en ce que l'enveloppe externe (55) renferme la chambre de précombustion à air frais (70), en formant une chambre à air frais (61), et forme dans la chambre à air frais une entrée (62) qui entoure un tuyau d'évacuation des gaz (12).

4. Dispositif de chauffage suivant une des revendications 1 à 3, caractérisé en ce que, pour la formation d'une chambre sous la pression d'un ventilateur, une paroi (37) de la chambre de ventilateur (35) s'élargit sous une forme spiralée en partant d'un étranglement (45) jusqu'à un diffuseur (43) qui débouche tangentiellement dans la chambre de chauffe.

5. Dispositif de chauffage suivant une des revendications 1 à 4, caractérisé en ce que la chambre de précombustion à air frais (70) est façonnée avec sa paroi latérale (61) en un corps spiralé dans lequel la roue de ventilateur (75) fonctionne en direction de l'ouverture du tube mélangeur.

6. Dispositif de chauffage suivant une des revendications 1 à 5, caractérisé en ce que la chambre de ventilateur (35) et la chambre de précombustion (70) sont formées d'une pièce façonnée commune à base de l'élément de plaque plan des plaques de fermeture et de base (36, 32), des parois de chambre de ventilateur et de précombustion (37, 71) qui s'écartent de l'élément de plaque dans des sens opposés ainsi que d'un socle de chambre de chauffe (78) qui complète la paroi de chambre de ventilateur.

7. Dispositif de chauffage suivant une des revendications 1 à 6, caractérisé en ce que la chambre à air frais (61) est conformée en un corps de montage (60).

8. Dispositif de chauffage suivant une des revendications 1 à 7, caractérisé en ce que l'échangeur de chaleur (10) entouré par l'enveloppe de chambre de chauffe (28) présente une enveloppe ondulée (15) à canaux d'ondulation ouverts vers l'extérieur pour l'air de chauffe ascendant ainsi qu'un compartiment annulaire (11) qui est façonné à la base et dont le cylindre de socle (13) est, par ses parois de transition (26), adapté quant à sa hauteur à l'ouverture d'entrée (29) de l'enveloppe de chambre de chauffe.

# Fig.1

Fig.2

Fig.3

Fig.4